**Europäisches Patentamt**

**European Patent Office**

**Office européen des brevets**

(19)

(11) Veröffentlichungsnummer: **0 019 657**
A1

(12) # EUROPÄISCHE PATENTANMELDUNG

(21) Anmeldenummer: **79103015.8**

(22) Anmeldetag: **17.08.79**

(51) Int. Cl.³: **B 01 D 23/20,** C 02 F 3/04

(30) Priorität: **31.05.79 CH 5085/79**

(43) Veröffentlichungstag der Anmeldung: **10.12.80**
**Patentblatt 80/25**

(84) Benannte Vertragsstaaten: **AT BE CH DE FR GB IT LU NL SE**

(71) Anmelder: **GEBRÜDER SULZER AKTIENGESELLSCHAFT, Zürcherstrasse 9, CH-8401 Winterthur (CH)**

(72) Erfinder: **Tylmann, Josef, Brunngasse, CH-8400 Winterthur (DE)**

(74) Vertreter: **Sparing, Nikolaus, Dipl.-Ing., Lindemannstrasse 31, D-4000 Düsseldorf (DE)**

(54) **Filterdüse für Filteranlagen.**

(57) Um ein Zusammenbrechen des für eine gleichmässige Luftspülung notwendigen Luftpolsters in einem Drainagerohr (2) zu verhindern, haben die Filterdüsen (2) auf einem ersten höheren Niveau Durchströmöffnungen (13) geringen Gesamtquerschnitts für Luft und auf einem darunter liegenden Niveau Durchströmöffnungen (11) größeren Gesamtquerschnittes für Wasser. In Abhängigkeit vom Niveau (20) des Wasserspiegels im Drainagerohr (1) sind die unteren Durchströmöffnungen (11) durch einen Schwimmerkolben (15) verschliessbar. Auf diese Weise wird ein Ausströmen der gesamten Luft durch die weiteren Durchströmöffnungen (11) einzelner Düsen beim Absinken des Wasserspiegels (20) verhindert.

P.5427/Wg/mm

**Gebrüder Sulzer Aktiengesellschaft, Winterthur/Schweiz**

**Filterdüse für Filteranlagen**

Die Erfindung betrifft eine Filterdüse für eine Filteranlage, insbesondere für die Wasseraufbereitung, mit mindestens einem rückspülbaren Filterfeld, wobei der ins Filterfeld eintauchende Kopf der Düse in mindestens einem Drainagerohr befestigt ist, das seinerseits im Bereich des
Bodens des Filterfeldes angeordnet ist, während der Schaft
der Düse in das Drainagerohr hineinragt, wobei ferner die
Anlage mit einer Rückspülvorrichtung zum periodischen Reinigen der Filtermasse mit Hilfe von Druckluft und Druckwasser ausgerüstet ist.

Filterdüsen in Aufbereitungsanlagen für Flüssigkeiten, insbesondere für Wasser, sind im allgemeinen derart angeordnet, dass sie während der Rückspülung der Filtermasse mit
Luft und/oder Flüssigkeit von unten nach oben durchströmt
werden, wobei sich der Düsenschaft unten und der mit Schlitzen versehene Düsenkopf oben befindet. Entsprechend der
Strömungsgeschwindigkeit unterschiedlicher Spülmedien –
Luft oder Flüssigkeit – lassen sich die erforderlichen
Durchflussquerschnitte durch entsprechend angeordnete und
bemessene Löcher im Düsenschaft kalibrieren (CH-PS
462 781). Die Durchflussrichtung vom Düsenschaft zum Düsen-

0019657

kopf von unten nach oben erlaubt auch ein gleichzeitiges Durchströmen von Luft und Flüssigkeit während des Spülvorganges.

Sollen derartige Filterdüsen – beispielsweise in Drainagerohren (CH-Anmeldung Nr. 5066/78) – umgekehrt angeordnet werden, also mit obenliegendem Düsenschaft, unter dem sich der mit Schlitzen versehene Düsenkopf befindet, so kehrt sich auch die Durchflussrichtung der Spülmedien durch die Düse um, sie verläuft also von oben nach unten. In diesem Fall ist ein gleichzeitiges Strömen beider Spülmedien – Luft und Flüssigkeit – durch die gleiche Düse nicht möglich. Der Spülvorgang müsste daher darauf beschränkt werden, dass die Filtermasse ausschliesslich mit Flüssigkeit rückgespült wird.

Der Einsatz von Luft als Spülmedium ist jedoch im Hinblick auf die Wirtschaftlichkeit einer Filteranlage von grosser Bedeutung, weil durch eine Luftspülung nicht nur eine bessere Rinigung der körnigen Filtermasse erzielt wird, sondern auch grosse Mengen von Spülflüssigkeit eingespart werden.

Daher sind bereits Filteranlagen mit Drainagerohren bekannt (DE-AS 24 36 44), bei denen die Filtermasse – ebenso wie bei Anlagen mit Düsenböden – abwechselnd mit Luft und Flüssigkeit gespült wird. Allerdings sind die dortigen Drainagerohre nicht mit Filterdüsen bestückt.

Drainagerohrfilter mit, wie erwähnt, unten angeordneten Düsenköpfen auf diese Weise zu spülen, erweist sich jedoch als problematisch, weil die für einen Flüssigkeitsdurchfluss bemessenen Querschnitte eines Düsenschaftes von sehr grossen Luftmengen durchströmt werden müssten, um eine gleichmässige Verteilung der Spülluft über die gesamte Fläche des Filterbettes zu erzielen; denn zur Gleichverteilung kleinerer Luftmengen über grosse Filterbettflächen sind entsprechend klein bemessene Luftdurchlassquerschnitte zu den einzelnen Düsenköpfen erforderlich.

Für eine wirksame und gleichförmige Rückspülung grossflächiger Filter könnte man Düsen unterschiedlicher Bauart einsetzen, die einen mit für Spülluft, die anderen mit für Spülflüssigkeit bemessenem Durchflussquerschnitt zum Düsenkopf.

Diese Massnahme weist aber verschiedene Nachteile auf. Zum einen fliessen während des Filtrationsvorganges aufgrund der unterschiedlich bemessenen Durchflussquerschnitte unterschiedliche Flüssigkeitsmengen durch die zwei verschiedenen Düsenarten; dies wirkt sich speziell in der Nähe der Düsen als ungleichförmige Belastung der körnigen Filtermasse aus. Zum anderen liefern während des Spülvorganges, besonders wenn bei Mehrschichtenfiltern grosse Flüssigkeitsmengen zur Schichtentrennung erforderlich sind, die für Spülflüssigkeit bemessenen Düsen den Hauptteil der Flüssigkeitsmenge, während die für Spülluft bemessenen Düsen aufgrund ihrer kleinen Querschnitte einen nur unwesentlichen Beitrag zur Schichtentrennung leisten. Die Trennung der einzelnen Schichten könnte in dem Filterbett örtlich daher sehr unterschiedlich sein.

Aufgabe der vorliegenden Erfindung ist es daher, für Filteranlagen, bei denen die Düsen mit ihrem Kopf nach unten angeordnet sind, Filterdüsen zu schaffen, mit denen sich die für Düsenböden konventioneller Bauart bekannte, gleichzeitige oder abwechselnde Spülung mit Luft oder Flüssigkeit problemlos durchführen lässt und bei denen sich die für die Luft und die Flüssigkeit notwendigerweise stark unterschied-

0019657

lichen Durchflussquerschnitte selbstständig einstellen.

Die Lösung dieser Aufgabe erfolgt dadurch, dass im Düsenschaft der mit ihrem Kopf nach unten angeordneten Düse mindestens eine erste Durchströmöffnung mit relativ grossem Oeffnungsquerschnitt für Flüssigkeit und mindestens eine zweite Durchströmöffnung mit relativ zum ersten geringem Oeffnungsquerschnitt für Luft vorgesehen sind, und dass mindestens der Strömungsweg zwischen der ersten Durchströmöffnung und dem Düsenkopf durch vom Flüssigkeitsniveau im Drainagerohr gesteuerte Mittel absperrbar ist.

Die Mittel zum Verschliessen des einen oder des anderen Strömungsweges, die mit Vorteil aus einem Schwimmerkolben bestehen, ermöglichen, dass der für die Flüssigkeitsspülung vorgesehene Strömungsweg in der einzelnen Düse selbstständig verschlossen wird, sobald das Flüssigkeitsniveau im Drainagerohr eine bestimmte Höhe unterschreitet und gleichzeitig damit der in seinem Widerstand durch Durchströmöffnungen relativ kleinen Querschnitts gekennzeichnete Strömungsweg für die Luft freigegeben wird. Die starke Erhöhung des Strömungswiderstandes bewirkt dabei, dass die zur Gleichverteilung benötigte Luftmenge gegenüber den eingangs diskutierten Einrichtungen auf den tatsächlichen Spülluftbedarf der Filtermasse reduziert wird.

Bildet man die Schwimmkolben so aus, dass sie beidseits einer radialen Mittelebene einen unterschiedlichen Auftrieb aufweisen, so ist es möglich, bei gleichzeitiger Rückspülung mit Luft und Flüssigkeit durch eine der im Drainagerohr hintereinander angeordneten Düsen Luft und durch eine dazu benachbarte Düse Flüssigkeit zu schicken, indem die Schwimmerkolben einmal mit ihrer Hälfte stärkeren Auftriebs nach oben und einmal mit dieser Hälfte nach unten in den Düsenschaft eingebaut werden.

Im folgenden wird die Erfindung anhand von Ausführungsbeispielen im Zusammenhang mit der Zeichnung näher erläutert.

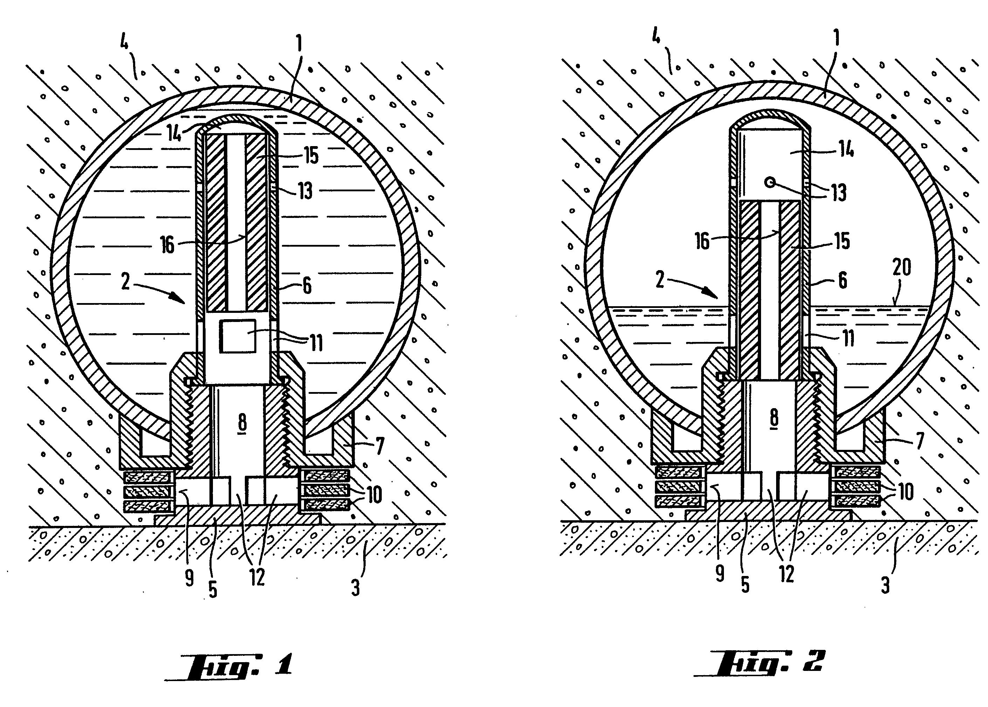

Fig. 1    zeigt einen Querschnitt durch ein Drainagerohr, dass mit einer der neuen, ebenfalls im Schnitt dargestellten Filterdüsen ausgerüstet ist; die Darstellung der Fig. 1 zeigt den in der Düse als Absperrmittel vorhandenen Schwimmerkolben in der Stellung, in der er sich beim Filterbetrieb und beim Rückspülen nur mit Wasser befindet.

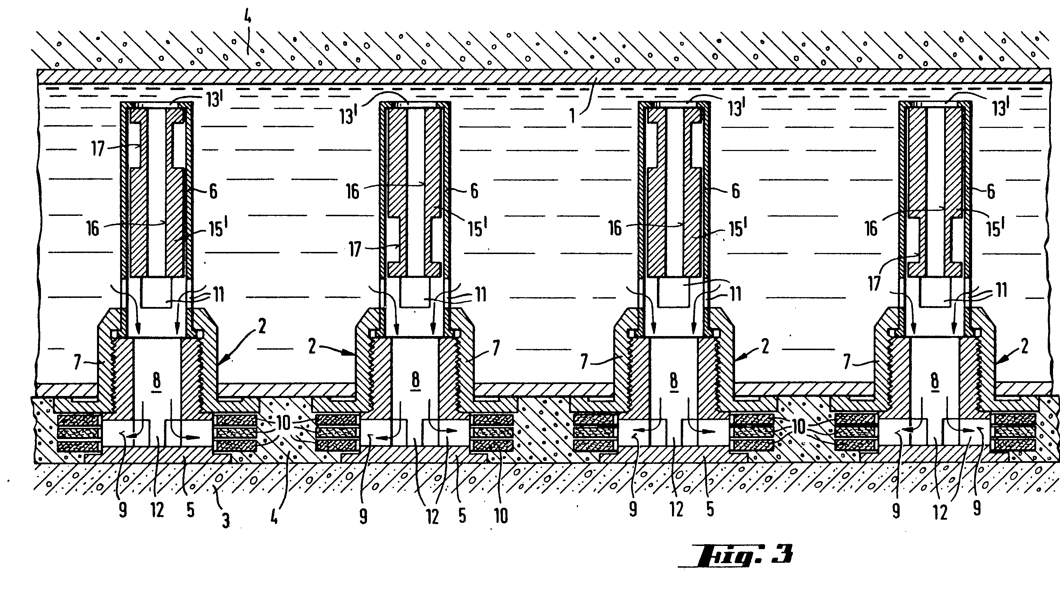

Fig. 2    gibt in gleicher Darstellung wie Fig. 1 die gleiche Düse wieder; diesmal jedoch befindet sich der Schwimmerkolben in der während der Luftspülung eingenommenen Stellung.

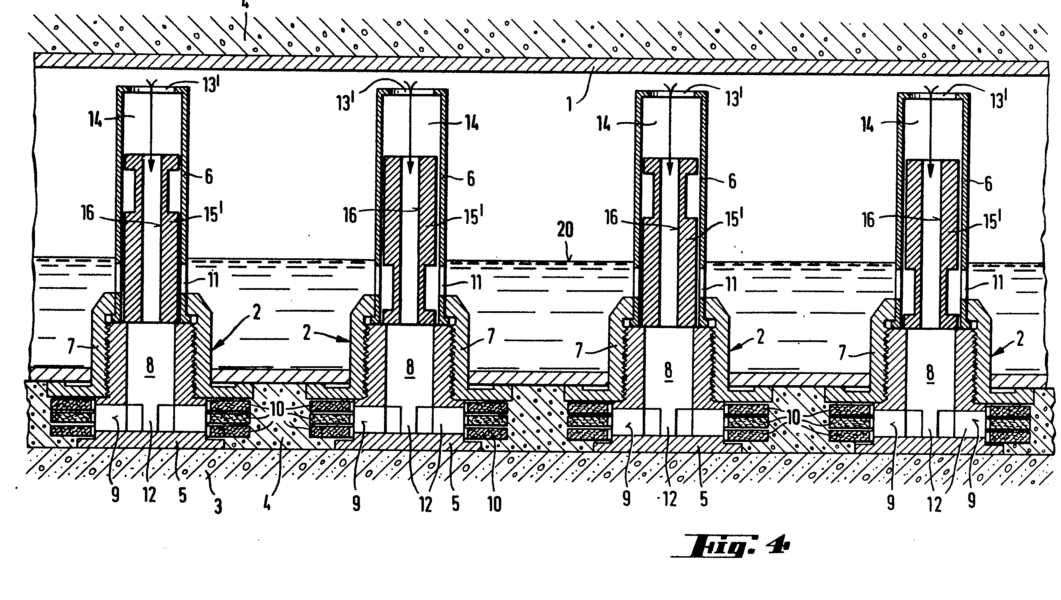

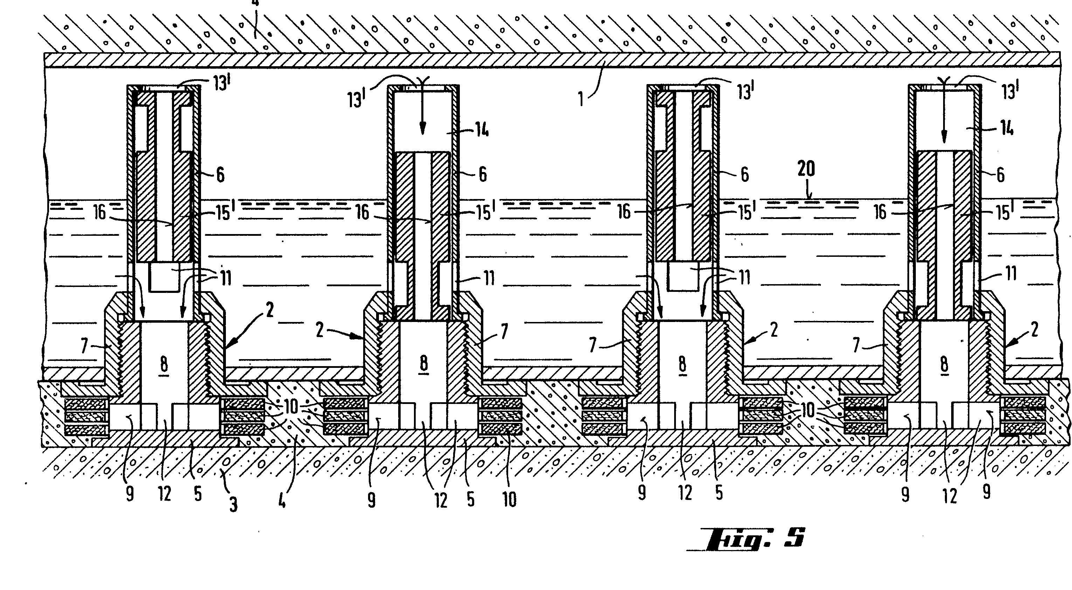

Fig. 3 bis 5  geben diesmal in einem Längsschnitt durch ein Drainagerohr eine zweite Ausführungsform der erfindungsgemässen Düse wieder, wobei Fig. 3 den Filterbetrieb und die Spülung mit Flüssigkeit, Fig. 4 das Spülen mit Luft und Fig. 5 eine Spülung gleichzeitig mit Luft und Flüssigkeit verdeutlicht.

Ein Drainagerohr 1, in das als Ganzes mit 2 bezeichnete Filterdüsen eingesetzt sind, ist so auf dem Boden 3 eines mit körnigem Material gefüllten Filterfeldes 4 abgestellt, dass die Düsenköpfe 5 gegen den Boden 3 und der Düsenschaft 6 im Inneren des Rohres 1 nach oben gerichtet sind.

Für die Montage der Düsen 2 wird durch Bohrungen im Drainagerohr 1 zunächst ein Zwischen- oder Auflagering 7 gesteckt, der eine zentrale Gewindebohrung aufweist. Diese geht in ihrem inneren oberen Ende in eine Durchströmöffnung geringeren Querschnitts über. Gegen den so entstehenden Absatz stösst ein Flansch eines weiter in das Rohr hineinragenden, durch die Durchstromöffnung hindurch gesteckten Düsenschaftes 6.Der Schaft 6 ist durch den in die Gewindebohrung des Zwischenrings 7 eingeschraubten Düsenkopf 5 gehalten, durch den gleichzeitig Filterscheiben 10 auf die Aussenseite des Zwischenrings 7 gepresst werden.

Der innen hohle Düsenschaft 6 hat nahe seinem unteren Ende erste Durchströmöffnungen 11, die in Verbindung mit einem vertikalen Hohlraum 8 und den mit Rippen 12 versehenen horizontalen Querverbindungen 9 im Düsenkopf 5 einen ersten Strömungsweg zwischen dem Filterfeld 4 und dem Inneren des Drainagerohres 1 bilden, durch den beim Filterbetrieb Filtrat in das Drainagerohr 1 und beim Spülen Rückspülflüssigkeit in das Filterfeld 4 fliessen. Die für die Flüssigkeitsströmung bestimmten Durchströmöffnungen 11 haben einen relativ grossen Gesamtströmungsquerschnitt.

Auf einer Niveauhöhe oberhalb der ersten Durchströmöffnungen 11 hat der Düsenschaft 6 zweite Durchströmöffnungen 13 mit gegenüber dem ersten relativ geringem Gesamtströmungsquerschnitt.

Als Mittel für das Verschliessen der ersten Durchströmöffnungen 11 ist im Hohlraum 14 des Düsenschaftes 6 ein mit der Niveauhöhe 20 (Fig. 2) der Flüssigkeit, d. h. im allgemeinen des Wassers, im Drainagerohr 1 verschiebbarer Schwimmerkolben 15 vorgesehen, durch den der Strömungsweg durch die Durchströmöffnungen 11 bei abgesenktem Wasserniveau im Drainagerohr 1 (Fig. 2) verschlossen wird, während gleichzeitig aus dem Luftraum über dem abgesenkten Wasserniveau durch die Durchströmöffnungen 13 und einen zentralen Kanal 16 im Schwimmerkolben 15 ein Strömungweg für Luft zum Hohlraum 8 im Düsenkopf 5 geöffnet wird; denn Luft für eine Luftspülung dringt auf dem zweiten Strömungsweg, also durch die Oeffnungen 13 und den Kanal 16, nur in den Hohlraum 8 und weiter durch den Hohlraum 9 und die Filterscheiben 10 in das Filterbett 4 ein, wenn die Durchströmöffnungen 11 verschlossen sind.

Das Verschliessen und die Freigabe der Durchströmöffnungen 11 erfolgt selbsttätig durch das fallende bzw. steigende Wasserniveau 20 im Drainagerohr 1; denn bei niedrigem Flüssigkeitsstand vermag der Auftrieb den Schwimmerkolben 15 nicht mehr zu tragen, dieser sinkt daher im Hohlraum 14 so weit nach unten, dass er auf dem Düsenkopf 5, der gegenüber dem Düsenschaft 6 etwas nach innen vorspringt, aufliegt. Bei wieder steigendem Flüssigkeitsniveau beginnt der Schwimmerkolben 15 aufzuschwimmen; von einer gewissen Niveauhöhe ab gibt er daher die Durchströmöffnung 11 wieder frei, während die Luftströmung durch die Oeffnungen 13 gleichzeitig unterbrochen wird.

Beim zweiten Ausführungsbeispiel sind gegenüber dem ersten zum einen die Durchströmöffnungen 13 geringen Querschnitts durch eine einzige Oeffnung 13' im oberen Abschluss des Hohlraums 14 ersetzt. Zum anderen ist der Schwimmerkolben 15 gegen einen Kolben 15' ausgetauscht, der, von einer radialen Mittelebene aus gesehen, auf einer Seite einen geringeren Auftrieb aufweist, der durch ein, mit Hilfe einer ringförmigen Ausnehmung 17 erzeugtes, geringeres Volumens bewirkt wird.

Bei mehreren, in einem Drainagerohr 1 hintereinander angeordneten Düsen 2 sind die Schwimmerkolben 15' abwechslungsweise mit der "leichteren" Hälfte nach oben und nach unten eingebaut.

Bei flüssigkeitsgefülltem Drainagerohr 1 ergibt sich für die hinsichtlich einer radialen Mittelebene unsymmetrischen Schwimmerkolben 15' dadurch keine Aenderung in ihrer Lage gegenüber dem Kolben 15 der Fig. 1 (Fig. 3). Das Gleiche gilt für eine, in Fig. 4 gezeigte Stellung bei niedrigem Flüssigkeitsniveau 20: Wie beim Kolben 15 der ersten Ausführungsform sind alle Durchströmöffnungen 11 bei niedrigem Flüssigkeitsstand abgeschlossen. In dieser Stellung des Kolbens 15' erfolgt eine reine Luftspülung des Filterfeldes 4.

Bei einem mittleren Wasserstand im Rohr 1 jedoch werden nur noch die Kolben 15' mit stärkerem Auftrieb, d. h. diejenigen, die mit ihrem unverringerten Volumen in die Flüssigkeit eintauchen, von der Flüssigkeit getragen (erste und dritte Düse von links in Fig. 5), während die anderen, wie in Fig. 5 gezeigt, abgesunken sind und die Durchströmöffnungen 11 verschliessen.

Bei gleichzeitigem Beaufschlagen des Drainagerohres 1 mit Spülluft und Spülwasser wird auf diese Weise eine Rückspülung mit Luft und Wasser ermöglicht, da durch die Düsen 2 mit freigegebenen Durchströmöffnungen 11 Spülwasser und durch die Düsen 2 mit versperrten Durchströmöffnungen 11 (zweite und vierte Düse von links in Fig. 5) Spülluft in das Filterfeld 4 geleitet werden.

0019657

Patentansprüche

1. Filterdüse für eine Filteranlage, insbesondere für die Wasseraufbereitung, mit mindestens einem rückspülbaren Filterfeld, wobei der ins Filterfeld eintauchende Kopf der Düse in mindestens einem Drainagerohr befestigt ist, das seinerseits im Bereich des Bodens des Filterfeldes angeordnet ist, während der Schaft der Düse in das Drainagerohr hineinragt, wobei ferner die Anlage mit einer Rückspülvorrichtung zum periodischen Reinigen der Filtermasse mit Hilfe von Druckluft und Druckwasser ausgerüstet ist, dadurch gekennzeichnet, dass im Düsenschaft (6) der mit ihrem Kopf (5) nach unten angeordneten Düse (2) mindestens eine erste Durchströmöffnung (11) mit relativ grossem Oeffnungsquerschnitt für Flüssigkeit und mindestens eine zweite Durchströmöffnung (13, 13') mit relativ zum ersten geringem Oeffnungsquerschnitt für Luft vorgesehen sind, und dass mindestens der Strömungsweg zwischen der ersten Durchströmöffnung (11) und dem Düsenkopf (5) durch vom Flüssigkeitsniveau (20) im Drainagerohr (1) gesteuerte Mittel (15, 15') absperrbar ist.

2. Filterdüse nach Anspruch 1, dadurch gekennzeichnet, dass die Absperrmittel für die erste Durchströmöffnung (11) in einem Schwimmerkolben (15, 15') bestehen, der in Längsrichtung des Düsenschaftes (6) verschiebbar ist.

3. Filterdüse nach Anspruch 2, dadurch gekennzeichnet, dass der Schwimmerkolben (15, 15') mindestens eine Längsbohrung (16) aufweist.

4. Filterdüse nach Anspruch 2, dadurch gekennzeichnet, dass der Schwimmerkolben (15')beidseits einer radialen Mittelebene einen unterschiedlichen Auftrieb aufweist.

0019657

Fig. 2

Fig. 1

0019657

*Fig. 3*

0019657

Fig. 4.

Fig. 5

0019657

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - C - 944 723</u> (BRUNO LIETZ) | 1,2,3 |
| | * Seite 2; Figuren *<br>-- | |
| A | <u>GB - A - 1 239 971</u> (PERMUTIT) | |
| A | <u>DE - B - 1 642 860</u> (PERMUTIT) | |
| A | <u>DE - C - 806 787</u> (CHEMISCHE FABRIK BUDENHEIM)<br>---- | |

**KLASSIFIKATION DER ANMELDUNG (Int.Cl. 3)**

B 01 D 23/20
C 02 F 3/04

**RECHERCHIERTE SACHGEBIETE (Int. Cl. 3)**

B 01 D 23/20
C 02 F 3/04
3/06
3/10
B 01 J 47/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 02.09.1980 | DE PAEPE |

EPA form 1503.1 06.78